# EUROPEAN PATENT APPLICATION

(11) **EP 0 936 375 A2**
(43) Date of publication of application: **18.08.1999**
(21) Application number: 99830052.9
(22) Date of filing: 03.02.1999
(51) Int. Cl.: F16D 65/56

(54) **Brake assembly with self-adjusting micrometric incremental take-up device**

(30) Priority: 11.02.1998 IT BS980006
(71) Applicant: LPR S.r.l., 29010 Agazzano, Piacenza (IT)
(72) Inventor: Doadi, Alovisi, 26044 Levata Grontardo (Cremona) (IT); Ranzani, Luigi, 29100 Piacenza (IT)
(74) Representative: Manzoni, Alessandro

(57) **Abstract**

The invention regards a self-adjusting device (12) which can be applied to a shoe and drum type brake assembly (11) to take up the radial play between the shoes (14,15) and drum (13). It includes a link rod (20) anchored to the first shoe (14), a push rod (21) attached to the second shoe (15), a toothed free wheel (23) screwed onto a threaded shank (21') of the push rod (21) and which is made to turn in one direction in order to find and set the axial position of the push rod (21) to the link rod (20), and a bimetal plate or "thermoclip" (24) supported by the link rod (20) which provokes the rotation of the latter when the shoes (14,15) of the brake assembly (11) are expanded during braking.

## Description

The present invention concerns the hydraulically powered shoe type brake assemblies used in the automotive industry. It refers particularly to a self-adjusting device for this type of brake assembly.

Some calibrating devices are already known which applied to the above mentioned brake assemblies take up the radial play between the shoe and drum as the space between these parts increases due to wear caused by contact friction so as to maintain the efficiency of the brake assembly.
However, the take up of the play between the shoe and drum with the known devices occurs in steps, not in a linear way, thus not guaranteeing constant functional working play of the brake assembly.

Furthermore, these known devices house a safety system to stop the adjusting device from working should the brake assembly begin to overheat, this system is however different and independent from the adjusting system to take up play.

In view of the aforesaid, the purpose of the present invention is to present a brake assembly self-adjusting device which, on the contrary to the mechanisms available at present, is able to take up the functional operating play using infinitesimal variations which are in proportion to the wear on material caused by friction of the shoes in contact with the drum. In this way and to its advantage, the functional operating play between the shoe and the drum remains in fact constant.

Another purpose of the invention is to propose a self-adjusting device for brake assemblies which includes a unit suitable for performing two functions, that is to say, adjust the take up of play and stop the self-adjusting device in the presence of overheating. In similar known mechanisms these two functions up to now have been carried out by different units.

These two aims have been achieved, in compliance with the present invention, by a brake assembly for automotive vehicles complete with adjusting device complying with at least claim 1.

Further details of the invention including how it works will become more evident from the following description made in reference to the attached drawings, in which:
Fig. 1 shows a front view of a brake assembly complete with the self-adjusting device;
Fig.2 is a view only of the self-adjusting device;
Fig. 3 is a partial longitudinal cross section of the self-adjusting device, according to arrows III - III in Fig.2; and
Fig. 4 is a cross section of the device according to arrows IV - IV in Fig.3.

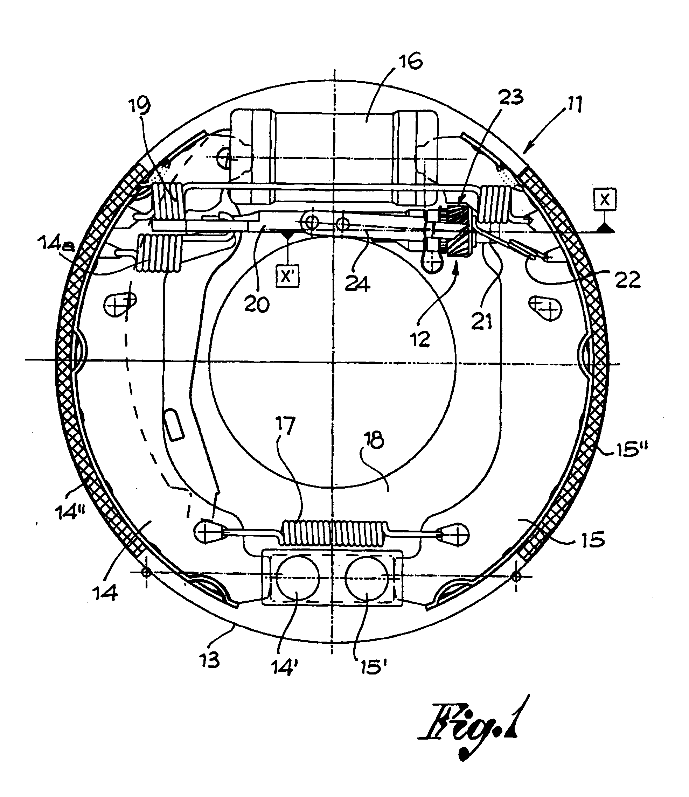

In said drawings, the brake assembly as a whole is indicated by number 11 and the self-adjusting device by 12. The brake assembly 11 is the type including - Fig. 1 - a drum 13 and, inside this, two expandable/contractible shoes 14,15 driven by an hydraulic cylinder 16 with the help of a spring 17 connecting the shoes and positioned respectively adjacent to their oscillating axis 14', 15' on a shoe holder support 18 and a second return spring 19 connected to the shoes in a point near the drive cylinder 16. Each shoe 14,15 has respectively the normal brake lining 14", 15", for braking against the drum 13 when the operating cylinder opens the shoes.

The self-adjusting device 12 includes: a link rod 20 anchored to a shoe 14 by a spring 14a; a push rod 21 anchored by means of a spring 22 to the other shoe 15, free to move along the x-x axis of the link rod 20 and with a threaded shank 21'; a free wheel 23 on the threaded shank 21'; and a bimetal contact and disengage plate 24, also known as a "thermoclip" interacting with the free wheel 23.

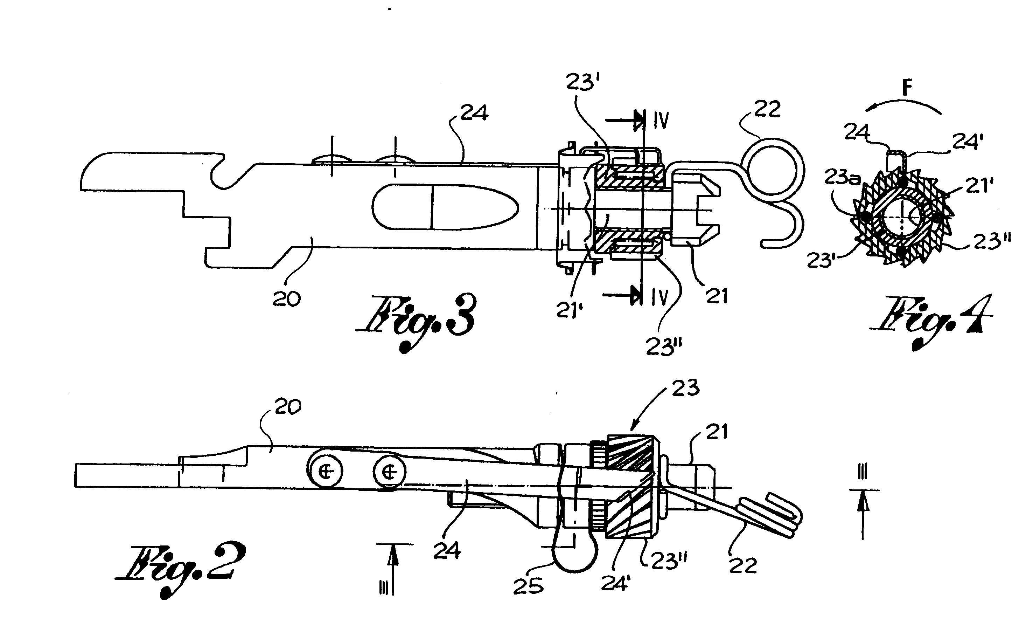

More precisely, this free wheel 23 has an internal section 23' screwed onto the threaded shank 21' of the push rod 21, and an external part with peripheral saw teething 23" and a means of actuating 23a placed between the internal and external parts so as to provoke unidirectional rotation in the direction of the arrow F - Fig.4 - of the internal part by the external part.

The bimetal plate 24, for its part - Figs. 2 and 3 - has one end attached to the link rod 20 and the other end in the shape of a drive tooth 24' engaged with the peripheral teething 23" of the free wheel 23 thus causing the latter to rotate.

Between the link rod 20 and the free wheel 23 there is a spring limiting device 25.

The self adjusting device 12 has the task of guaranteeing that the radial play between the shoes 14,15 and the drum 13 remains as far as is possible constant, by gradually reducing the space caused by wear of the pad of the brake assembly. The continual correction effect of the play is governed by the movement of the shoes when operated by the drive cylinder 16 in the expansion phase, that is when braking.

During this expansion phase relative movement is created between the link rod 20, which holds the bimetal plate 24 with the drive tooth 24' and the push rod 21.
Consequently tooth 24' of the bimetal plate 24, following this relative movement between said parts 20 and 21, causes the free wheel 23 to rotate along the x - x' axis turning its internal part 23' screwed onto the threaded shank 21' of the push rod in the direction to unscrew it.

In this way a progressive linear and micrometric lengthening of self-adjustion is achieved thanks to the push rod sliding outwards and being stopped by the free wheel. In this way the desired radial take up of the position of the shoes is accomplished.

During the return phase, that is the contraction of the shoes phase, the free wheel turns in the opposite direction without however influencing its internal part 23' which thus remains in the position previously reached, holding the position of the push rod.

Provision is also made for the rotation movement of the free wheel, with resulting take up, to be transmitted following a fixed stroke of the shoes to allow the braking action and relative return, intended as functional operating play.

The bimetal plate 24, besides its function as a means of actuating the free wheel in order to take up radial play, also acts as a safety measure by automatically disconnecting the self-adjusting device in the case of overheating of the brake assembly. The disengaging action is in fact caused by the bimetal plate or "thermoclip", which by warping at a fixed temperature, loses contact with the free wheel. In this condition, the self-adjusting device moves freely along the x-x' axis without however taking up.

When eventually the temperature returns to the normal operating temperatures, the bimetal plate 24 returns to its former work position restoring the conditions and re-establishing the pre-set position of the shoes.

## Claims

1. Self-adjusting device which can be applied to a shoe and drum type brake assembly to take up the radial play between the shoes and the drum as the space varies between these parts due to wear caused by contact friction of the material, characterised by the fact that it includes:
- a link rod (20) anchored to a shoe (14) of the brake assembly and having a free end facing the other shoe (15);
- a push rod (21) attached to the other shoe (15), supported and capable of sliding axially along the free end of said link rod (20) and also having a threaded shank (21')
- a free teethed wheel (23) assembled by screwing onto the threaded shank (21') of said push rod (21) and caused to turn in one direction so as to set and fix the axial position of the push rod in relation to the link rod and the shoe (15) to which it is connected; and
- a bimetal plate or "thermoclip" (24) carried by this link rod terminating in a drive tooth (24') which engages said free wheel (23) in order to turn the latter when the shoes (14,15) of the brake assembly are expanded in order to brake.

2. Device according to claim 1, where the link rod is anchored to a shoe by a spring (14a) and the push rod (21) is connected to the other shoe (15) by another spring (22).

3. Device according to claims 1 and 2, where said free wheel (23) has an internal part (23') screwed onto the threaded shank (21') of said push rod (21), an external part with peripheral teething (23") and a means of actuating (23a) positioned between said internal and external parts to provoke the relative rotation of the internal part with the threaded shrank when the external part is turned by the end drive tooth (24') of the bimetal plate (24).

4. Device according to preceding claims, where the bimetal plate (24) bends in the presence of a temperature higher than a given threshold so as to distance the drive tooth (24') from the peripheral teething of the free wheel (23) and thus block the working of the self-adjusting device.
